# FASCICULE DE BREVET EUROPEEN

(11) **EP 1 781 455 B1**
(45) Date de publication et mention de la délivrance du brevet: **26.10.2011**
(21) Numéro de dépôt: 05717681.0
(22) Date de dépôt: 21.01.2005
(51) Int. Cl.: B29B 11/16, B29C 70/54, B29C 70/48

(54) **PROCEDE DE FABRICATION D'UNE ARMATURE DISPOSANT D'AU MOINS UNE FACE ADHESIVE DE FACON REPOSITIONNABLE ET ARMATURE OBTENUE**
VERFAHREN ZUR HERSTELLUNG EINER VERSTÄRKUNG MIT MINDESTENS EINER KLEBEOBERFLÄCHE, DIE NEU POSITIONIERT WERDEN KANN, UND SICH ERGEBENDE VERSTÄRKUNG
METHOD FOR MAKING A REINFORCEMENT PROVIDED WITH AT LEAST ONE ADHESIVE SURFACE CAPABLE OF BEING REPOSITIONED AND RESULTING REINFORCEMENT

(30) Priorité: 22.01.2004 FR 0450119
(43) Date de publication de la demande: 09.05.2007
(73) Titulaire: Saertex France, 38510 Brangues (FR)
(72) Inventeur: Klethi, Thierry, 01300 Saint Benoit (FR); PINAN, Frédéric, 31140 Aucamville (FR)
(74) Mandataire: Fantin, Laurent
(86) Numéro de dépôt international: PCT/FR2005/050037
(87) Numéro de publication internationale: WO 2005/075168

(56) Documents cités:
- EP-A- 0 465 399
- WO-A-94/26505
- WO-A-02/088231
- FR-A- 2 074 134
- FR-A- 2 426 706
- GB-A- 846 020
- US-A- 4 139 591
- US-A- 5 217 766
- US-A- 5 445 848

## Description

La présente invention concerne un procédé de fabrication d'une armature disposant d'au moins une face adhésive de façon repositionnable selon la revendicaton 1. L'invention couvre aussi l'armature ainsi obtenue selon la revendication 7.

La fabrication de matériaux composites à base d'une ou plusieurs armatures noyées dans une matrice ou un mélange de matrices est de plus en plus utilisée pour la réalisation de pièces industrielles, dans de très nombreuses applications accessoires de sport, composants de véhicules par exemple.

Plusieurs procédés existent pour la réalisation de telles pièces. La méthode connue qui est retenue pour illustrer le contenu technique et l'intérêt de la présente invention, consiste à mouler la pièce par injection dans un moule en deux parties, une matrice en partie inférieure et un poinçon en partie supérieure, de forme conjuguée pour coopérer avec la matrice et assurer la mise en forme de la pièce. Le document WO-A-94/26505 décrit un tel procédé.

La première étape consiste à placer des pièces de matériau à base de fibres dans un moule. Ces matériaux à base de fibres sont choisis parmi une variété infinie : les fibres de verre sont beaucoup utilisées pour leurs bonnes propriétés mécaniques et leurs prix attractifs et les fibres de carbone ou aramides pour leurs excellentes propriétés mécaniques.

Pour la suite de la description, on entend par fibres les fibres ou fils fabriqués tels que les fils ou fibres de verre mais aussi tous les fils et mélanges de fils d'origine synthétique ou naturelle.

Ces matériaux sont souvent des non-tissés réalisés en une ou plusieurs couches superposées en fonction des propriétés mécaniques recherchées ou en fonction de l'état de surface final recherché pour ne citer que ces paramètres.

La fabrication de ces non-tissés est délicate et le positionnement, l'orientation, la longueur, le diamètre des fibres sont autant de paramètres à maîtriser.

Ces paramètres sont également liés à la nature du moulage et au type de résine.

Une fois les pièces de matériaux à base de fibres disposées dans le moule, généralement reçues dans la matrice, on positionne le poinçon de ce moule et on injecte, généralement en plusieurs points judicieusement choisis, de la résine qui se répartit dans le moule par fluage à travers les fibres, ceci pour le mode de réalisation retenu. On comprend là encore les interactions entre les paramètres des fibres et ceux de la résine auxquelles s'ajoutent les interactions engendrées par les profils des pièces à réaliser.

Un premier problème est de pouvoir draper la matrice du moule avec le matériau à base de fibres formant armature, qui est d'autant moins conformable qu'il est épais ou dense ou encore fortement assemblé. En effet, le matériau a des difficultés à épouser parfaitement la géométrie du moule, plus particulièrement celle de la matrice mais encore plus celle du poinçon, conduisant en cela à un positionnement moins précis de la pièce de matériau à base de fibres découpée, positionnement erroné que l'on retrouve une fois que la résine introduite aura polymérisé.

Ce type de réalisation n'est pas aussi simple que cela vient d'être décrit car les pièces fabriquées sont de plus en plus complexes. De fait, il est requis en certains endroits des renforts. Ces renforts sont alors réalisés par superposition de plusieurs couches du même matériau à base de fibres ou d'un autre matériau, sur une zone et suivant une configuration géométrique adaptée et précise.

C'est là une amplification du premier problème car il faut pouvoir conformer ce renfort suivant la géométrie donnée avec une forte épaisseur totale de l'ensemble.

Comme la pièce présente des dimensions plus réduites, il est difficile pour l'opérateur de mettre en forme les bords de cette pièce de renfort.

De plus, la pièce n'est tenue par aucun élément et dans certains cas, elle peut se déplacer au moment des mouvements des éléments du moule ou sous l'effet du fluage sous pression de la résine provoquant un renfort en un endroit non souhaité tandis qu'il manque à l'endroit visé. La pièce complète est alors mise au rebut.

Dans d'autres cas, le renfort ou une pièce doit être positionné de préférence sur le poinçon mais dans le cas des matériaux à base de fibres connus, cela est impossible car le renfort ou la pièce chute sous l'effet de la gravité.

De fait, pour pallier cet inconvénient, les opérateurs utilisent des bombes de colle en aérosol pour fixer les pièces. Tout d'abord cela est peu pratique car la colle adhère trop lentement rendant l'opération longue ou de façon rapide mais définitive interdisant tout défaut de positionnement nécessitant un repositionnement.

On note aussi qu'il s'agit d'utiliser des aérosols en milieu industriel ce qui répond à une législation particulière et le coût de telles mises en oeuvre est loin d'être négligeable.

Le but de la présente invention est un procédé de fabrication d'une armature à base de fibres, par exemple sous forme de mat de non tissé, qui pallie les inconvénients des produits existants notamment en permettant un positionnement précis, un positionnement mais aussi un repositionnement si nécessaire, ceci moyennant un surcoût acceptable.

L'invention couvre aussi le produit obtenu.

La description qui va suivre permet de mieux appréhender l'invention qui est illustrée par des exemples de réalisation, non limitatifs.

Le procédé consiste à préparer une armature à base de fibres, à déposer sur au moins une des surfaces de l'armature ainsi obtenue une colle repositionnable et à plaquer un intercalaire amovible sur la face ayant reçu ladite couche de colle repositionnable.

On peut ensuite découper des feuilles et les superposer ou plus généralement les enrouler.

On choisit la colle repositionnable de façon adaptée en ajustant ses propriétés mécaniques et pour qu'elle soit compatible avec la résine utilisée sans engendrer de pollution.

En effet, il faut impérativement que la colle ne provoque pas une pollution de la résine en modifiant les caractéristiques du produit final, en limitant les liaisons des fibres et de la résine ou des résines constituant la matrice du produit fini. Pour cette armature, les paramètres mécaniques concernés sont plus particulièrement le pouvoir d'accroche dit aussi "tack", la résistance au délaminage, la résistance à l'arrachement ou les variations de caractéristiques en fonction de la température.

Cette colle est de préférence déposée en sortie de fabrication de cette armature, par pulvérisation. Avantageusement, la colle est choisie parmi les colles "hot melt" en sorte de permettre une prise.quasi instantanée en surface sur les fibres afin de pouvoir y superposer un intercalaire par exemple une feuille de papier adapté. De plus, les colles hot melt sont exemptes de solvants. La nature de papier doit permettre un retrait de ce papier sans que les fibres du renfort réalisé soient entraînées et sans déstructurer le renfort.

L'utilisation d'une armature ainsi réalisée est grandement simplifiée pour l'opérateur.

En effet, celui-ci découpe le renfort d'armature avec l'intercalaire et peut ajuster ce renfort dans la matrice d'un moule ou sur un poinçon par exemple sans déstructurer le renfort qui est maintenu aux dimensions initiales par le papier. Après retrait de l'intercalaire, l'opérateur peut placer la pièce découpée, dans le même sens c'est-à-dire avec la face portant la colle contre la matrice ou le poinçon. La pièce d'armature drape ce fond de la meilleure manière puisque la forme est épousée sans pour cela porter atteinte à la structure du renfort et l'opérateur trouve là toute la souplesse de l'armature sans être perturbé par l'intercalaire qui a été retiré.

Dans cet agencement avec l'armature selon l'invention, l'épaisseur du renfort est conservée sur toute sa surface puisque seule la face est fixée sans provoquer une adhésion des fibres entre elles constituant l'armature, ce qui pourrait avoir comme conséquence de diminuer par endroit l'épaisseur. La colle n'est en effet présente qu'en surface.

Il n'y a plus de faux positionnement dans les zones à forte courbure. De même la pièce est mieux ajustée car pendant la découpe, le renfort n'est pas distendu, même involontairement par l'opérateur. Il y a donc bien toujours la quantité souhaitée de fibres dans la zone concernée.

Si la pièce est importante ou complexe et que son positionnement est délicat, la qualité repositionnable de la colle autorise un retrait partiel ou total de la pièce pour une remise en place.

Lors de l'injection de résine et de son fluage à travers les fibres, il n'y a pas de mouvement possible de la pièce.

Le produit fabriqué selon le procédé de la présente invention trouve un intérêt tout particulier lorsque l'opérateur souhaite positionner des renforts. Il peut en effet découper un renfort directement dans l'armature avec son intercalaire, le préparer en fonction de la géométrie et l'ajuster. Une fois cette opération faite, le renfort est prêt et il suffit de retirer l'intercalaire et de positionner ce renfort sur la pièce principale déjà en place et parfaitement ajustée. Le renfort est mis en place avec sa face munie de colle repositionnable contre la face exempte de colle du matériau constituant la pièce principale.

Le renfort est alors maintenu en place sur la pièce principale même si les rayons de courbure sont petits ou si le matériau constituant le renfort est peu souple. L'injection de colle et son fluage ne peuvent modifier la position de ce renfort sur la pièce principale.

De même, si le renfort n'est pas rapporté sur la pièce principale mais doit être positionné sur le poinçon du moule, il convient de prévoir l'utilisation du renfort avec sa face munie de colle repositionnable en vis-à-vis du poinçon pour qu'il puisse rester en place malgré la gravité.

Un attrait tout particulier du produit obtenu selon le procédé de la présente invention est celui des inserts.

On sait que les pièces industrielles sont équipées d'inserts en vue de leur fixation sur un support ou au contraire pour recevoir des éléments après montage.

Ces inserts doivent alors être placés préalablement. Les contours présentent généralement des angles vifs ou des courbes de faible rayon rendant délicate l'opération de drapage.

Avec les pièces découpées et munies de colle repositionnable, il est possible faire adhérer le renfort sur toutes les surfaces de l'insert si bien qu'après polymérisation de la résine, l'insert est noyé de façon adaptée et présente les meilleures garanties mécaniques.

L'insert peut aussi être de nature différente et notamment on peut trouver des noyaux de mousse qui doivent être noyés en des points précis. Le produit à drapage ajusté selon la présente invention est aussi parfaitement adapté, la mise en oeuvre étant la même que pour les inserts métalliques.

Un tel noyau peut même être drapé en dehors du moule avec une ou plusieurs couches puis rapporté au bon endroit dans le moule, permettant un gain de temps important et appréciable industriellement comme financièrement.

Selon la présente invention, il est prévu une étape supplémentaire du procédé qui consiste à déposer de la colle repositionnable sur l'autre face de l'armature à base de fibres.

De ce fait, les pièces découpées peuvent adhérer sur deux faces. Dans le cas d'un insert ou d'un noyau en mousse, on drape à l'extérieur l'insert ou le noyau et on rapporte ensuite l'insert ou le noyau ainsi drapé qui reste plaqué au lieu de la dépose dans le moule.

Des essais montrent qu'une quantité de colle réduite est nécessaire, de l'ordre de quelques grammes par mètre carré pour une colle thermofusible à caoutchouc organique résistant à une température de 115°C applicable à des renforts de fibres de verre compris entre 0,1 mm et 10 mm d'épaisseur et une densité comprise entre 10 g/m² et 5 000 g/m².

## Revendications

1. Procédé de fabrication d'une armature à base de fibres destinée à être noyée dans une matrice ou un mélange de matrices, **caractérisé en ce qu'**il consiste à réaliser les étapes suivantes :
- préparer un matériau à base de fibres, et
- déposer sur au moins une des surfaces du matériau ainsi obtenu une colle repositionnable.

2. Procédé de fabrication d'une armature à base de fibres selon la revendication 1, **caractérisé en ce qu'**il comprend une étape supplémentaire qui consiste à plaquer un intercalaire amovible sur la face ayant reçu ladite couche de colle repositionnable.

3. Procédé de fabrication d'une armature à base de fibres selon la revendication 1 ou 2, **caractérisé en ce qu'**il comprend une étape de découpage en feuilles ou d'enroulement.

4. Procédé de fabrication d'une armature à base de fibres selon la revendication 1 ou 2, **caractérisé en ce qu'**il consiste à choisir la colle repositionnable en ajustant ses propriétés mécaniques pour qu'elle soit compatible avec la matrice utilisée sans engendrer de pollution.

5. Procédé de fabrication d'une armature à base de fibres selon l'une quelconque des revendications précédentes, **caractérisé en ce que** l'on dépose la colle repositionnable en sortie de fabrication du renfort par pulvérisation.

6. Procédé de fabrication d'une armature à base de fibres selon l'une quelconque des revendications précédentes, **caractérisé en ce que** la colle est choisie parmi les colles hot melt.

7. Armature à base de fibres comprenant sur au moins une de ses surfaces une colle repositionnable obtenue par le procédé selon l'une quelconque des revendications 1 à 6 destinée à être noyée dans au moins une matrice.

## Claims

1. A method of manufacturing a fibre-based armature intended to be embedded in a matrix or a mixture of matrices, **characterised in that** it comprises performing the following steps:
- preparing a fibre-based material, and
- depositing a repositionable adhesive on at least one of the surfaces of the material thus obtained.

2. A method of manufacturing a fibre-based armature according to claim 1, **characterised in that** it comprises a supplementary step that comprises pressing a removable insert on the face that received said layer of repositionable adhesive.

3. A method of manufacturing a fibre-based armature according to claim 1 or 2, **characterised in that** it comprises a step of cutting into sheets or of rolling up.

4. A method of manufacturing a fibre-based armature according to claim 1 or 2, **characterised in that** it comprises, in choosing the repositionable adhesive, adjusting its mechanical properties so that it is compatible with the matrix used without causing contamination.

5. A method of manufacturing a fibre-based armature according to any one of the preceding claims, **characterised in that** the repositionable adhesive is deposited at the end of manufacture of the reinforcement by spraying.

6. A method of manufacturing a fibre-based armature according to any one of the preceding claims, **characterised in that** the adhesive is chosen from hot-melt glues.

7. A fibre-based armature comprising a repositionable adhesive on at least one of its surfaces obtained by the method according to any one of claims 1 to 6, intended to be embedded in at least one matrix.

## Patentansprüche

1. Verfahren zur Herstellung einer aus Fasern gebildeten Armierung zum Einbetten in eine Matrix oder in ein Matrixgemisch, **dadurch gekennzeichnet, dass** es darin besteht, die folgenden Schritte durchzuführen:
- Vorbereiten eines aus Fasern bestehenden Werkstoffs, und
- Aufbringen eines Klebstoffs zur korrigierbaren Verklebung auf mindestens eine der Flächen des auf diese Weise erzielten Werkstoffs.

2. Verfahren zur Herstellung einer aus Fasern gebildeten Armierung nach Anspruch 1, **dadurch gekennzeichnet, dass** es einen weiteren Schritt umfasst, der darin besteht, auf die Seite, auf die die Schicht Klebstoff zur korrigierbaren Verklebung aufgebracht wurde, ein abnehmbares Trennblatt anzudrücken.

3. Verfahren zur Herstellung einer aus Fasern gebildeten Armierung nach Anspruch 1 oder 2, **dadurch gekennzeichnet, dass** es einen Schritt umfasst, der darin besteht, in Bögen zu schneiden oder einzurollen.

4. Verfahren zur Herstellung einer aus Fasern gebildeten Armierung nach Anspruch 1 oder 2, **dadurch gekennzeichnet, dass** es darin besteht, den Klebstoff zur korrigierbaren Verklebung zu wählen und dabei seine mechanischen Eigenschaften anzupassen, damit er mit der verwendeten Matrix kompatibel ist, ohne dabei eine Verunreinigung hervorzurufen.

5. Verfahren zur Herstellung einer aus Fasern gebildeten Armierung nach einem der vorstehenden Ansprüche, **dadurch gekennzeichnet, dass** der Klebstoff zur korrigierbaren Verklebung durch Sprühen aufgebracht wird, wenn die Verstärkung aus der Herstellung kommt.

6. Verfahren zur Herstellung einer aus Fasern gebildeten Armierung nach einem der vorstehenden Ansprüche, **dadurch gekennzeichnet, dass** der Klebstoff aus der Gruppe der Heißkleber ausgewählt ist.

7. Aus Fasern gebildete Armierung, die auf mindestens einer ihrer Flächen einen Klebstoff zur korrigierbaren Verklebung aufweist, die durch das Verfahren nach einem der Ansprüche 1 bis 6 hergestellt und zur Einbettung in mindestens eine Matrix bestimmt ist.
